# EUROPEAN PATENT APPLICATION

(11) **EP 2 058 376 A1**
(43) Date of publication of application: **13.05.2009**
(21) Application number: 08019423.6
(22) Date of filing: 06.11.2008
(51) Int. Cl.: C09D 11/00

(54) **Liquid composition for preventing bubble adhesion**

(30) Priority: 06.11.2007 JP 2007289054
(71) Applicant: Seiko Epson Corporation, Tokyo 163-0811 (JP)
(72) Inventor: Sao, Akihito, Suwa-shi, Nagano-ken, 392-8502 (JP); Kitamura, Kazuhiko, Suwa-shi, Nagano-ken, 392-8502 (JP); Koike, Yasunori, Suwa-shi, Nagano-ken, 392-8502 (JP)
(74) Representative: HOFFMANN EITLE

(57) **Abstract**

A liquid composition for preventing bubble adhesion, containing a diacetylene tetraol compound expressed by the following General Formula (1): 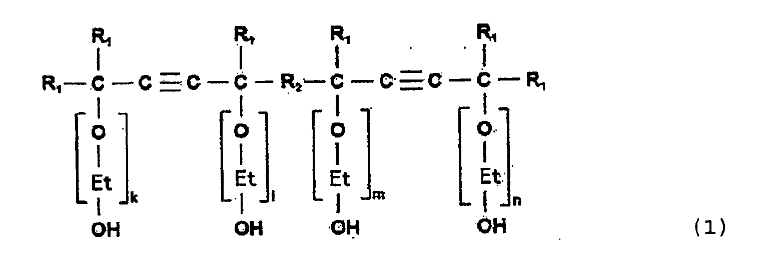 (where R₁ and R₂ are each independently a C₁ to C₃ alkyl group, -O-Et- is an oxyethylene group, and k, l, m, and n are each an integer from 0 to 2).

## Description

### BACKGROUND

### 1. Technical Field

The present invention relates to a novel liquid composition for preventing bubble adhesion that can be applied to inkjet recording, and more particularly relates to a liquid composition for preventing bubble adhesion with which the adverse effect caused by the adhesion of bubbles to members forming an ink channel in inkjet recording is reduced, allowing normal ink discharge to be obtained.

### 2. Related Art

Inkjet recording is a printing method in which droplets of ink are discharged from a fine nozzle head and made to adhere to paper or another recording medium. An advantage of this method is that an image of high resolution and quality can be printed at high speed with a relatively inexpensive device. Inkjet recording devices that employ this method are widely used commercially because of their good print quality, low cost, relatively quiet operation, and ability to form graphics. Thermal (Bubblejet^{®}) and piezoelectric drop-on-demand printers have been particularly successful in the marketplace, and have come to be widely used as personal computer printers in the home and office.

In particular, piezoelectric drop-on-demand printers can accommodate a wide range of physical characteristics of discharged inks by adjusting the applied electrical characteristics, and in recent years have been used in an increasingly wide range of fields. As the demand for higher print quality and faster printing grows, there has been greater nozzle integration and higher density, and as the head structure has become more complex, so too have the ink channels.

On the other hand, while piezoelectric drop-on-demand printers do have good versatility, if bubbles are in the ink channel, the generated discharge energy may not be properly propagated, and discharge may become unstable.

To prevent these bubbles in the ink channel from adhering to the channel formation members and staying there, cleaning liquids have been utilized to wash away foreign matter that can become a site that causes adhesion (JP-A-2005-7703). However, while washing away foreign matter in the channel does reduce the adhesion of super bubbles to the channel, but does not reduce adhesion to the members themselves, and this problem needs to be addressed.

### SUMMARY

The invention was conceived after taking into account the above-mentioned facts related to the ink channel formation members used in an inkjet recording method, and makes it possible to obtain proper discharge by reducing the adhesion of bubbles to ink channel formation members.

As a result of diligent research, the inventors found that the above problems could be solved by using a liquid composition containing a specific diacetylene tetraol compound as, for example, a material that forms an ink channel formation member or the like that is capable of preventing bubble adhesion.

The invention was conceived on the basis of this finding, and the stated object is achieved by providing the following inventions.

1. A liquid composition for preventing bubble adhesion, containing a diacetylene tetraol compound expressed by the following General Formula (1):

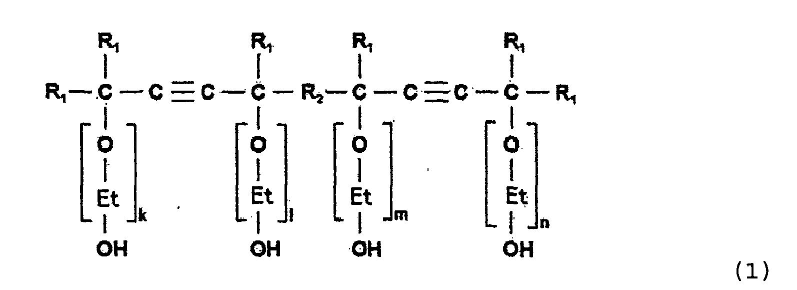

(where R₁ and R₂ are each independently a C₁ to C₃ alkyl group, -O-Et- is an oxyethylene group, and k, 1, m, and n are each an integer from 0 to 2).

2. The liquid composition for preventing bubble adhesion according to 1 above, wherein the diacetylene tetraol compound is contained in an amount of at least 0.01 wt%, more preferably at least 0.05 wt%.

3. The liquid composition for preventing bubble adhesion according to 1 or 2 above, wherein water or a mixture of water and a water-soluble organic solvent is contained as a main solvent.

4. The liquid composition for preventing bubble adhesion according to any of 1 to 3 above, which is used in a member of an inkjet recording device.

With the invention, the adverse effect caused by the adhesion of bubbles to members forming an ink channel in inkjet recording is reduced, allowing normal ink discharge to be obtained.

### DESCRIPTION OF EXEMPLARY EMBODIMENTS

The liquid composition for preventing bubble adhesion pertaining to the invention will now be described on the basis of preferred embodiments thereof.

The liquid composition for preventing bubble adhesion of the invention contains a diacetylene tetraol compound expressed by the following General Formula (1).

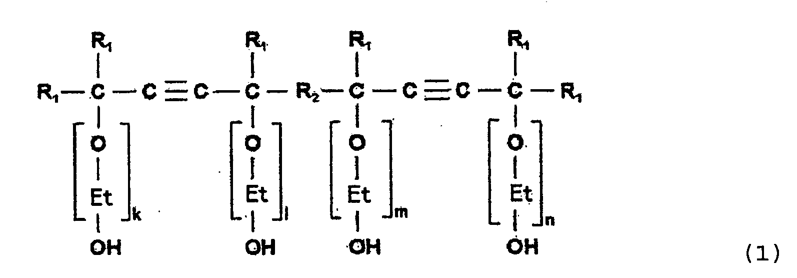

(In the formula, R₁ and R₂ are each independently a C₁ to C₃ alkyl group, -O-Et- is an oxyethylene group, and k, 1, m, and n are each an integer from 0 to 2.)

With the invention, because of the above constitution, inkjet recording can be provided with which the adverse effect caused by the adhesion of bubbles to members forming an ink channel is reduced, which makes it possible to obtain normal discharge.

With the liquid composition for preventing bubble adhesion of the invention, it is preferable if the diacetylene tetraol compound is contained in an amount of at least 0.01 wt%, and more preferably at least 0.05 wt%. If the amount is within this range, it will be possible to form a member containing sufficient diacetylene tetraol compound.

The diacetylene tetraol compound expressed by General Formula (1) and used in the invention can be a single type, or a mixture of two or more types can be used.
The liquid composition for preventing bubble adhesion of the invention is preferably used in a member of an inkjet recording device, and particularly an ink channel formation member.

It is preferable to lower the surface tension of the liquid composition for preventing bubble adhesion of the invention, and it is particularly favorable for the surface tension at 25°C to be no more than 30 mN/m.

The liquid composition for preventing bubble adhesion of the invention preferably contains water or a mixture of water and a water-soluble organic solvent the main solvent, in order to obtain a suitable drying rate and viscosity.

Also, the liquid composition for preventing bubble adhesion of the invention can contain as needed a humectant, a viscosity regulator, or other additives (discussed below).

Specific examples of water-soluble organic solvents include propylene glycol, butanediol, pentanediol, 2-butene-1,4-diol, 2-methyl-2,4-pentanediol, 1,2,6-hexanetriol, diethylene glycol, triethylene glycol, dipropylene glycol, and other such polyhydric alcohols; methyl diglycol, ethyl diglycol, butyl triglycol, hexyl glycol, 2-ethylhexyl glycol, and other such glycol ethers; methyl alcohol, ethyl alcohol, n-propylene alcohol, n-butyl alcohol, and other such alkyl alcohols; acetonylacetone and other such ketones; gamma-butyrolactone; triethyl phosphate and other such esters; and furfuryl alcohol, tetrahydrofurfuryl alcohol, thiodiglycol, and glycerol.

The above-mentioned water-soluble organic solvent is preferably contained in an amount of 5 to 40 wt%, and more preferably 10 to 30 wt%, and even more preferably 10 to 20 wt%, with respect to the total amount of the liquid composition for preventing bubble adhesion, in order to obtain a suitable drying rate and viscosity.

Furthermore, the liquid composition of the invention can contain a surfactant in order to impart moisture and washing of the member surface, and to ensure dissolution stability of the diacetylene tetraol compound expressed by General Formula (1).

The surfactant can be an anionic surfactant, such as soap, an N-acylamino acid salt, a polyoxyethylene or polyoxypropylene alkyl ether carboxylate, an acylated peptide, an alkylsulfonate, and alkylbenzene or alkylnaphthalene sulfonate, a naphthalenesulfonate, a sulfosuccinate, an alpha-olefin sulfonate, an N-acylsulfonate, a sulfated oil, an alkylsulfate, an alkyl ether sulfate, a polyoxyethylene or polyoxypropylene alkyl allyl ether sulfate, an alkylamide sulfate, an alkylphosphate, or a polyoxyethylene or polyoxypropylene alkyl allyl ether phosphate.

Cationic surfactants that can be used include an aliphatic amine salt, an aliphatic quaternary ammonium salt, a benzalkonium chloride salt, benzethonium chloride, a pyridinium salt, and an imidazolinium salt.

Amphoteric surfactants that can be used include a carboxybetaine type, an aminocarboxylate, imidazolinium betaine, lecithin, and an alkylamine oxide.

Nonionic surfactants that can be used include a polyoxyethylene alkyl or alkylphenyl ether, alkylallyl formaldehyde condensed polyoxyethylene ether, a polyoxyethylene polyoxypropylene block polymer, a polyoxyethylene polyoxypropylene alkyl ether, a polyoxyethylene ether of a glycerol ester, a polyoxyethylene ether of a sorbitan ester, and a polyoxyethylene ether of a sorbitol ester, and as ester types, a polyethylene glycol fatty acid ester, a glycerol ester, a polyglycerol ester, a sorbitan ester, a propylene glycol ester, a sucrose ester, a fatty acid alkanolamide, a polyoxyethylene fatty acid amide, a polyoxyethylene alkylamide, and a fluorine-based surfactant.

Of these surfactants, when a nonionic surfactant is used, if the member is dipped in the liquid composition of the invention and then dried at a high temperature in that state, the formation of a layer containing the diacetylene tetraol compound expressed by General Formula (1) may be hindered, so it is preferable to use an anionic surfactant, a cationic surfactant, or an amphoteric surfactant.

The liquid composition of the invention can also contain as needed a pH regulator, a dissolution improver, an antioxidant, a preservative, an anti-mildew agent, a rustproofing agent, or the like.

More specifically, examples of pH regulators, dissolution improvers, and antioxidants that can be used as additives include diethanolamine, triethanolamine, propanolamine, morpholine, and other such amines and modifications thereof; potassium hydroxide, sodium hydroxide, lithium hydroxide, and other such metal hydroxides; ammonium hydroxide, quaternary ammonium hydroxide (tetramethyl ammonium, etc.), and other such ammonium salts; potassium carbonate, sodium carbonate, lithium carbonate, and other such carbonates, phosphates, and so on; N-methyl-2-pyrrolidone, 2-pyrrolidone, and other such pyrrolidones; urea, thiourea, tetramethylurea, and other such ureas; allophanate, methyl allophanate, and other such allophanates; biuret, dimethyl biuret, tetramethyl biuret, and other such biurets; and L-ascorbic acid and salts thereof.

Examples of preservatives and anti-mildew agents that can be used include sodium benzoate, pentachlorophenol sodium, 2-pyridinethiol-1-oxide sodium, sodium sorbate, sodium dehydroacetate, 1,2-dibenzothiazolin-3-one (made by Avecia under the trade names Proxel CRL, Proxel BND, Proxel GXL, Proxel XL-2, and Proxel TN). These components can be used singly or as a mixture in which a plurality of components are selected from within a single group or among different groups.

The liquid composition of the invention can be applied, for example, to an ink channel formation member by dipping a substrate in the liquid composition, forming a layer containing the above-mentioned diacetylene tetraol compound on the substrate surface, so that this layer suppresses the adhesion of bubbles.

In the formation of this layer, it is preferable if the substrate is dipped in the liquid composition of the invention and dried so that at least 10 vol% of the liquid composition is removed. Within this range, it will be possible to form a layer containing enough of the diacetylene tetraol compound.

In the formation of this layer, it is preferable if the substrate is soaked for an extended period and at high temperature in the liquid composition of the invention, and preferably for at least 3 days and at normal temperature or higher. With this range, it will be possible to form a layer containing enough of the diacetylene tetraol compound. Working Examples

Working examples of the invention and comparative examples will now be given, but the invention is in no way limited by these working examples.

Preparation of Liquid Composition Containing Diacetylene Tetraol Compound The liquid compositions shown in Tables 1 and 2, containing the diacetylene tetraol compound expressed by General Formula (1), were prepared as the above-mentioned liquid compositions. More specifically, the raw materials of the various components were thoroughly mixed and dissolved in a solvent, and this product was pressure filtered through a membrane filter with an aperture of about 0.8 µm. The bubble adhesion was evaluated for each of the liquid compositions thus obtained. The evaluation method is discussed below. These results are given in Tables 1 and 2.

**Table 1**

| Material | Working Example | | | | | | | |
|---|---|---|---|---|---|---|---|---|
| | 1 | 2 | 3 | 4 | 5 | 6 | 7 | 8 |
| Diacetylene tetraol compound 1 | | | | | | | | |
| Diacetylene tetraol compound 2 | | | | | | | | |
| Diacetylene tetraol compound 3 | | | | | | | | |
| Diacetylene tetraol compound 4 | | | | | | | | |
| Diacetylene tetraol compound 5 | 0.10 | | | | | | | |
| Diacetylene tetraol compound 6 | | | | | | | | |
| Diacetylene tetraol compound 7 | | 0.10 | | | | | | |
| Diacetylene tetraol compound 8 | | | | | | | | |
| Diacetylene tetraol compound 9 | | | 0.10 | 0.08 | 0.06 | 0.05 | 0.04 | 0.10 |
| Diacetylene tetraol compound 10 | | | | | | | | |
| Diacetylene tetraol compound 11 | | | | | | | | |
| Diacetylene tetraol compound 12 | | | | | | | | |
| Diacetylene tetraol compound 13 | | | | | | | | |
| Diacetylene tetraol compound 14 | | | | | | | | |
| 2-ethylhexyl hexaethylene glycol | 3.00 | 3.00 | 3.00 | 3.00 | 3.00 | 3.00 | 3.00 | 3.00 |
| Glycerol | 10.00 | 10.00 | 10.00 | 10.00 | 10.00 | 10.00 | 10.00 | 10.00 |
| Triethylene glycol | 10.00 | 10.00 | 10.00 | 10.00 | 10.00 | 10.00 | 10.00 | 10.00 |
| Proxel XL-2 | 0.30 | 0.30 | 0.30 | 0.30 | 0.30 | 0.30 | 0.30 | 0.30 |
| Benzotriazole | 0.01 | 0.01 | 0.01 | 0.01 | 0.01 | 0.01 | 0.01 | 0.01 |
| Water | 76.59 | 76.59 | 76.59 | 76.61 | 76.63 | 76.64 | 76.65 | 76.59 |
| | 100.0 | 100.0 | 100.0 | 100.0 | 100.0 | 100.0 | 100.0 | 100.0 |
| | | | | | | | | |
| Bubble adhesion (-) | 5 | 5 | 5 | 5 | 5 | 5 | 4 | 3 |

**Table 2**

| Material | Comparative Example | | | | | | | | | | |
|---|---|---|---|---|---|---|---|---|---|---|---|
| | 1 | 2 | 3 | 4 | 5 | 6 | 7 | 8 | 9 | 10 | 11 |
| Diacetylene tetraol compound 1 | | 0.10 | | | | | | | | | |
| Diacetylene tetraol compound 2 | | | 0.10 | | | | | | | | |
| Diacetylene tetraol compound 3 | | | | 0.10 | | | | | | | |
| Diacetylene tetraol compound 4 | | | | | 0.10 | | | | | | |
| Diacetylene tetraol compound 6 | | | | | | 0.10 | | | | | |
| Diacetylene tetraol compound 8 | | | | | | | 0.10 | | | | |
| Diacetylene tetraol compound 9 | | | | | | | | | | | |
| Diacetylene tetraol compound 10 | | | | | | | | 0.10 | | | |
| Diacetylene tetraol compound 11 | | | | | | | | | 0.10 | | |
| Diacetylene tetraol compound 12 | | | | | | | | | | 0.10 | |
| Diacetylene tetraol compound 13 | | | | | | | | | | | 0.10 |
| Diacetylene tetraol compound 14 | | | | | | | | | | | |
| 2-ethylhexyl hexaethylene glycol | 3.00 | 3.00 | 3.00 | 3.00 | 3.00 | 3.00 | 3.00 | 3.00 | 3.00 | 3.00 | 3.00 |
| Glycerol | 10.00 | 10.00 | 10.00 | 10.00 | 10.00 | 10.00 | 10.00 | 10.00 | 10.00 | 10.00 | 10.00 |
| Triethylene glycol | 10.00 | 10.00 | 10.00 | 10.00 | 10.00 | 10.00 | 10.00 | 10.00 | 10.00 | 10.00 | 10.00 |
| Proxel XL-2 | 0.30 | 0.30 | 0.30 | 0.30 | 0.30 | 0.30 | 0.30 | 0.30 | 0.30 | 0.30 | 0.30 |
| Benzotriazole | 0.01 | 0.01 | 0.01 | 0.01 | 0.01 | 0.01 | 0.01 | 0.01 | 0.01 | 0.01 | 0.01 |
| Water | 76.69 | 76.59 | 76.59 | 76.59 | 76.59 | 76.59 | 76.59 | 76.59 | 76.59 | 76.59 | 76.59 |
| | 100.0 | 100.0 | 100.0 | 100.0 | 100.0 | 100.0 | 100.0 | 100.0 | 100.0 | 100.0 | 100.0 |
| | | | | | | | | | | | |
| Bubble adhesion (-) | I 1 | 1 | 1 | 1 | 1 | 2 | 2 | 2 | 1 | 1 | 1 |

Table 3 shows the structure (R₁, R₂, k, 1, m, and n in General Formula (1)) of the diacetylene tetraol compounds in the tables. The "0 to 4" of R₁ and R₂ in Table 3 indicate the carbon number of the alkyl group.

**Table 3**

| Material | R₁ and R₂ | k, 1, m, and n |
|---|---|---|
| Diacetylene tetraol compound 1 | 0 | 0 |
| Diacetylene tetraol compound 2 | 0 | 1 |
| Diacetylene tetraol compound 3 | 0 | 2 |
| Diacetylene tetraol compound 4 | 0 | 3 |
| Diacetylene tetraol compound 5 | 1 | 2 |
| Diacetylene tetraol compound 6 | 1 | 3 |
| Diacetylene tetraol compound 7 | 2 | 2 |
| Diacetylene tetraol compound 8 | 2 | 3 |
| Diacetylene tetraol compound 9 | 3 | 2 |
| Diacetylene tetraol compound 10 | 3 | 3 |
| Diacetylene tetraol compound 11 | 4 | 0 |
| Diacetylene tetraol compound 12 | 4 | 1 |
| Diacetylene tetraol compound 13 | 4 | 2 |
| Diacetylene tetraol compound 14 | 4 | 3 |

Substrate To visually confirm the adhesion of bubbles, a tube 3 mm in diameter and 15 mm long was produced from a cyclic olefin copolymer (hereinafter referred to as COC) that was an optical resin. This tube was bent 90° every 5 mm, forming a U-shape. The adhesion of bubbles occurred mainly at these bends.

Soaking and Allowing to Stand A CMC ink channel produced as above was combined with an inkjet head, cleaning was performed, and each liquid composition was drawn into the inkjet head to fill the CMC ink channel. At this point, no bubbles adhered to the CMC ink channel. Everything was then allowed to stand for 5 days at normal temperature. During this time each of the CMC channels was separated from the inkjet head, and the front and back of the channel were left open.

Evaluation of Bubble Adhesion After standing for 5 days as above, the COC channel was combined again with the inkjet head, cleaning was performed with super-pure water having a resistivity of at least 15 MΩ, and the amount of bubbles adhering in the COC channel was quantified as "no adhesion 5 > 4 > 3 > 2 > 1 much adhesion." One point was the amount of bubbles adhering when the channel was not soaked in the liquid composition in each case. A small amount of colorant was added to each liquid composition to improve visibility, and when the discharge state and the printed matter were checked, it was found that the greater the amount of bubble adhesion, the more likely discharge bending was to occur, and the more disarrayed was the printed matter.

The invention provides a liquid composition that reduces the adverse effect caused by bubbles adhering to the material that forms an ink channel, which makes proper discharge possible, and that will help in obtaining a head structure that will be indispensable to improving print quality in the future, as well as an ink channel formation member in which this liquid composition is used, an ink channel in which this member is used, and an ink head, and as such can be utilized industrially.

## Claims

1. A liquid composition for preventing bubble adhesion, containing a diacetylene tetraol compound expressed by the following General Formula (1): 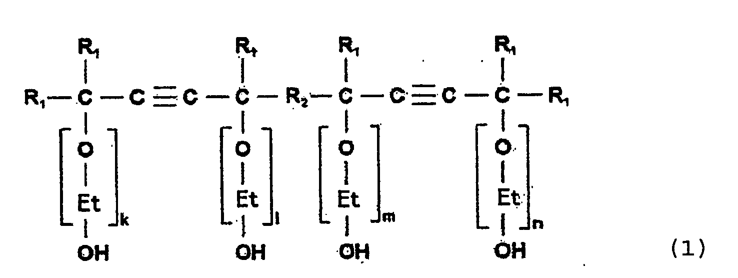 (where R₁ and R₂ are each independently a C₁ to C₃ alkyl group, -O-Et- is an oxyethylene group, and k, 1, m, and n are each an integer from 0 to 2).

2. The liquid composition for preventing bubble adhesion according to Claim 1, wherein the diacetylene tetraol compound is contained in an amount of at least 0.01 wt%.

3. The liquid composition for preventing bubble adhesion according to Claim 1 or 2, wherein water or a mixture of water and a water-soluble organic solvent is contained as a main solvent.

4. The liquid composition for preventing bubble adhesion according to any of Claims 1 to 3, which is used in a member of an inkjet recording device.
